# EUROPÄISCHE PATENTANMELDUNG

(11) **EP 2 719 493 A1**
(43) Veröffentlichungstag der Anmeldung: **16.04.2014**
(21) Anmeldenummer: 12188167.6
(22) Anmeldetag: 11.10.2012
(51) Int. Cl.: B23K 26/34, B23K 9/04, F01D 5/00

(54) **Schweißstelle und Komponent mit unterschiedlichen Materialien**

(71) Anmelder: Siemens Aktiengesellschaft, 80333 München (DE)
(72) Erfinder: Kaiser, Axel, 41462 Neuss (DE); Melzer-Jokisch, Torsten, 15366 Neuenhagen bei Berlin (DE)

(57) **Zusammenfassung**

Durch die Verwendung von Schweißbahnen (4', 7', 4", 7", ..., 44', 77', 44" , 77" , ...), die verschiedene Materialphasen mit zumindest einer Schweißebene (22', 22", ...) aufweisen, wird das Spallationsverhalten deutlich verbessert.

Erfindungsgemäß weist die Schweißstelle (17) verschiedene Materialphasen und/oder verschiedene Materialien (4', 4", ..., 44', ..., 7', 7'', ..., 77) auf. Die schraffierten Bereiche (4', 44', ...) stellen eine erste Materialphase und die hellen Bereiche (7', 77', ...) eine zweite, verschiedene Materialphase oder weisen eine deutlich verschiedene Zusammensetzung auf. Die balkenförmigen Darstellungen sind die Schweißbahnen (4', 7', ...), wobei dieser Querschnitt der Schweißbahnen (4', 7', ...) nur beispielhaft ist. Die Schweißbahnen (4', 7', ...) können auch andere Querschnitte aufweisen. Jede der Schweißbahn (4', 44', 7', 77', ...) weist vorzugsweise eine andere Materialphase auf (abwechselnd nebeneinander). Solche Strukturen sind in der Regel am besten durch Laserschweißen herzustellen. Aber auch andere Schweißverfahren können angewendet werden.

## Beschreibung

Die Erfindung betrifft eine Schweißstelle, die Schweißbahnen aus verschiedenen Materialien aufweist und eine Komponente.

Bei der Reparatur von Turbinenkomponenten, die aus nickelbasierten Superlegierungen bestehen und einen hohen γ'-Gehalt aufweisen, ist die Wärmeeinbringung in Bezug auf Rissbildung eine große Herausforderung. Aus diesem Grund ist die Art der Wärmeeinbringung und -führung von entscheidender Bedeutung. Je weniger Wärme insgesamt eingebracht wird, desto geringer ist die Wahrscheinlichkeit, dass sich Risse bilden.

Zum Einen wird derzeit durch Vorwärmung das Grundmaterial an das Temperaturfeld des Schweißgutes herangeführt, so dass Temperaturgradienten und thermische Spannungen reduziert werden. Die gleichförmige Abkühlung bzw. weitere Wärmebehandlungen sorgen für spannungsarmes (rissminimiertes) Schweißen. Das bevorzugte Schweißen bei Raumtemperatur beinhaltet das "Einfrieren" von Gefügezuständen durch sehr hohe Temperaturgradienten. Dies wird durch Kühlen der Vorrichtungen und/oder durch geringe Auftragsraten an Schweißzusatz mit Zwischenkühlung erzeugt. Materialbedingt sind immer wieder Risse festzustellen.

Es ist daher Aufgabe der Erfindung, eine Schweißstelle und eine Komponente aufzuzeigen, bei dem oben genannte Probleme gelöst werden.

Es ist daher Aufgabe der Erfindung eine Schweißstelle aufzuzeigen, die einen höheren Widerstand gegen Abplatzungen aufweist.

Die Aufgabe wird gelöst durch eine Schweißbahn gemäß Anspruch 1 und durch eine Komponente nach Anspruch 20.

In den Unteransprüchen sind weitere vorteilhafte Maßnahmen aufgelistet, die beliebig miteinander kombiniert werden können, um weitere Vorteile zu erzielen.
1. Schweißstelle (17),
   die längsgerichtete Schweißbahnen (4', 7', 4'' , 7'' , ..., 44', 77', 44'', 77'', ...) aufweist,
   die jeweils eine Schweißebene (22', 22'', ...) bilden,
   wobei mehrere Schweißebenen (22', 22'' , ...) vorhanden sind,
   wobei in zumindest einer Schweißebene (22', 22'' , ...) verschiedene Materialphasen verwendet werden,
   wobei zumindest zwei verschiedene,
   insbesondere nur zwei,
   verschiedene Materialphasen,
   ganz insbesondere verschiedene Materialien,
   vorhanden sind.
2. Schweißstelle nach Anspruch 1,
   bei der zumindest eine,
   insbesondere jede zweite,
   ganz insbesondere jede Schweißebene (22', 22'' , ...) verschiedene Materialien aufweist,
   insbesondere verschiedene Anteile einer γ'-Materialphase einer nickelbasierten Legierung.
3. Schweißstelle nach Anspruch 1,
   bei der jede zweite Schweißebene (22'') nur eine Materialphase oder ein Material aufweist.
4. Schweißstelle nach einem oder mehreren der vorherigen Ansprüche,
   bei der die Materialphasen verschiedene Materialien darstellen.
5. Schweißstelle nach einem oder mehreren der vorherigen Ansprüche,
   bei der alle Schweißbahnen (4' , 7' , 4'' , 7'' , ..., 44', 77', ...) in eine Längsrichtung (11) verlaufen.
6. Schweißstelle nach einem oder mehreren der vorherigen Ansprüche,
   bei der die Schweißbahnen (4' , 7' , 4'' , 7'' , ... 44' , 77' , 44'' , 77'' , ...) einer Schweißebene (22', 22'' , ...) alle in eine Richtung (11, 14) verlaufen.
7. Schweißstelle nach einem oder mehreren der vorherigen Ansprüche,
   bei der benachbarte Schweißbahnen (4', 7', ... 44', 77', ...) einer Schweißebene (22', 22'') immer ein anderes Material aufweisen.
8. Schweißstelle nach einem oder mehreren der vorherigen Ansprüche,
   bei der die Schweißbahnen (44', 77') einer Schweißebene (22'') eine andere Materialphase aufweisen als die direkt unterliegenden und kontaktierten Schweißbahnen (7', 4', ...) der unterliegenden Schweißebene (22') auf der (7', 4', ...) die jeweiligen Schweißbahnen (44', 77', ...) aufliegen.
9. Schweißstelle nach Anspruch 8,
   bei der eine nachfolgende Schweißebene (22''') mit ihren Schweißbahnen (444', 777', ...) der vorvorhergehenden Schweißebene (22') mit dem Schweißbahnen (4', 7', ...) entspricht.
10. Schweißstelle nach einem oder mehreren der Ansprüche 1 bis 4, 6 oder 7,
   bei der die Schweißbahnen (44', 77', ...) einer nachfolgenden Schweißebene (22'') quer (14) zur Längsrichtung (11) der Schweißbahnen (4', 7', ...) der unterliegenden Schweißebene (22') verlaufen,
   ganz insbesondere um 90°,
   insbesondere dass die Verlaufrichtung in den Schweißbahnen sich von Schweißebene (22', ...) zu Schweißebene (22'', ...) immer wieder ändert,
   ganz insbesondere um 90°.
11. Schweißstelle nach Anspruch 10,
   bei der eine nachfolgende Schweißebene (22''') mit ihren Schweißbahnen (444', 777', ...) der vorvorhergehenden Schweißebene (22') entspricht.
12. Schweißstelle nach Anspruch 10 oder 11,
   bei der eine nachfolgende Schweißebene (22''') mit ihren Schweißbahnen (444', 777', ...) nicht der vorvorhergehenden Schweißebene (22') in Richtung (20) entspricht.
13. Schweißstelle nach einem oder mehreren der Ansprüche 1, 2, 3, 4, 5, 6, 9, 10 oder 11,
   bei der in zumindest einer Schweißebene (22'') nur ein Material vorhanden ist.
14. Schweißstelle nach einem oder mehreren der vorherigen Ansprüche,
   bei der Schweißbahnen (4', 7', 44', 77', ...) mit ihrer Längsrichtung (25, 27) schräg zur Oberfläche (30) verlaufen,
   insbesondere um 10° verkippt sind.
15. Schweißstelle nach Anspruch 14,
   bei der die Längsrichtung (27) der Schweißbahnen (4', 7', ...) einer nachfolgenden Schweißebene (22'') im Vergleich zu der Längsrichtung (25) der Schweißbahnen (44', 77', ...) der vorhergehenden Schweißebene (22') in die andere Richtung verkippt ist.
16. Schweißstelle nach einem oder mehreren der vorherigen Ansprüche,
   bei der die verschiedenen Schweißbahnen (44', 77', ...) der direkt nachfolgenden Schweißebene (22'') zwei Schweißbahnen (4', 7') der vorhergehenden Schweißebene (22') überdecken.
17. Schweißstelle nach einem oder mehreren der vorhergehenden Ansprüche,
   bei der der Querschnitt der Schweißbahnen (44', 77', ...) verschieden groß ist,
   insbesondere verschieden breit ist.
18. Schweißstelle nach Anspruch 17,
   bei der der Querschnitt mehrer Schweißbahnen des gleichen Materials oder der gleichen Materialphase zusammen plusförmig (+) ausgebildet ist.
19. Schweißstelle nach einem oder mehreren der vorherigen Ansprüche,
   bei dem zwei oder drei benachbarte Schweißbahnen die gleiche Materialphase oder das gleiche Material aufweisen.
20. Komponente nach Anspruch 20,
   bei der die Auftragsschweißung auf Stellen des Substrats aufgetragen wird,
   die im Einsatz hohe und Temperaturen erfahren und auf Stellen des Substrats aufgetragen wird,
   die im Einsatz niedrigere Temperaturen erfahren, und
   der Anteil des Schweißpulvers mit dem hohen γ'-Anteil in dem Bereich mit der höheren Temperaturbelastung höher ist.
21. Komponente nach einem oder beiden der Ansprüche 20 oder 21,
   die ein nickel- oder kobaltbasiertes Substrat aufweist.

Es zeigen:
- Figur 1 bis 8: Ausführungsbeispiele der Erfindung,
- Figur 9: eine Turbinenschaufel,
- Figur 10: eine Brennkammer,
- Figur 11: eine Gasturbine,

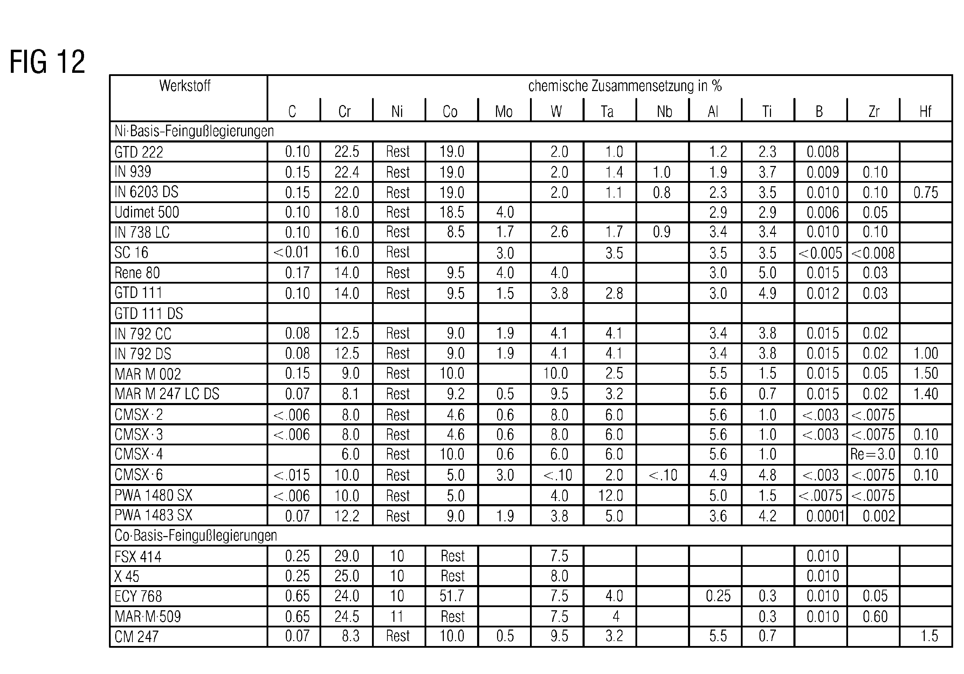

- Figur 12: eine Liste von Superlegierungen.

Die Figuren und die Beschreibung stellen nur Ausführungsbeispiele der Erfindung dar.

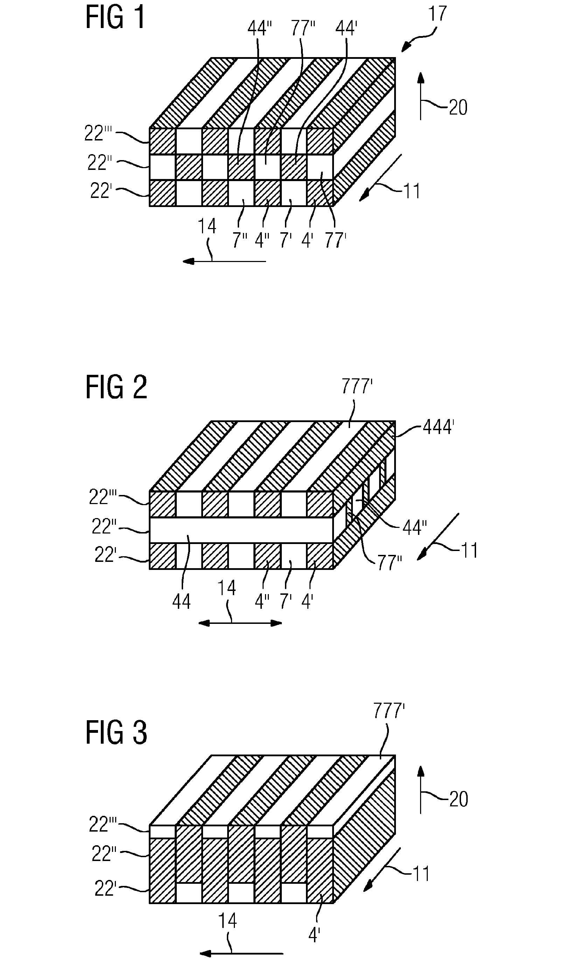

Figur 1 zeigt ein erstes Beispiel für eine Schweißstelle 17. Erfindungsgemäß weist die Schweißstelle 17 verschiedene Materialphasen und/oder verschiedene Materialien 4', 4'' , ..., 44' , ..., 7' , 7'', ..., 77' , ... auf.

Die schraffierten Bereiche 4', 44', ... stellen eine erste Materialphase und die hellen Bereiche 7', 77', ... eine zweite, verschiedene Materialphase oder weisen eine deutlich verschiedene Zusammensetzung auf.

Ebenso erkennbar sind die balkenförmigen Darstellungen, die Schweißbahnen 4', 7', ..., wobei dieser Querschnitt der Schweißbahnen 4', 7', ... nur beispielhaft ist. Die Schweißbahnen 4', 7', ... können auch andere Querschnitte aufweisen.

Jede der Schweißbahn 4', 44', 7', 77', ... weist vorzugsweise eine andere Materialphase auf (abwechselnd nebeneinander).

Solche Strukturen (Fig. 1 - 8) sind in der Regel am besten durch Laserschweißen herzustellen.
Aber auch andere Schweißverfahren können angewendet werden.

Ebenso können zwei Schweißbahnen für die Materialphasen/Materialien nebeneinander gelegt werden, um eine Schweißbahn zu bilden, wodurch die Breite der Schweißbahnen verbreitert wird (gilt für Figuren 1 bis 7).

Auf ein Substrat oder auf eine Oberfläche (nicht dargestellt) wird in einer Verlaufrichtung der Längsrichtung 11 eine erste Schweißbahn 4' mit der ersten Materialphase gelegt. Danach wird die nächste direkt benachbarte Spur 7' einer zweiten Materialphase aufgebracht. Dies wiederholt sich quer zur Längsrichtung 11 in Querrichtung 14.

Eine solche Schweißstelle 17 wird lagenweise aufgetragen, d.h., sie weist in der Höhe 20 mehrere Schweißebenen 22', 22'' auf.

Auf die erste Schweißbahn 4' mit der ersten Materialphase in der Schweißebene 22' wird eine weitere Schweißbahn 77' in der folgenden Schweißebene 22'' mit der zweiten Materialphase belegt und benachbart davon wieder eine Schweißbahn mit einer anderen Materialphase. Quasi wird die Struktur der ersten Schweißebene 22' für die zweite Schweißebene 22'' in Querrichtung 14 um eine Schweißbahnbreite verschoben.

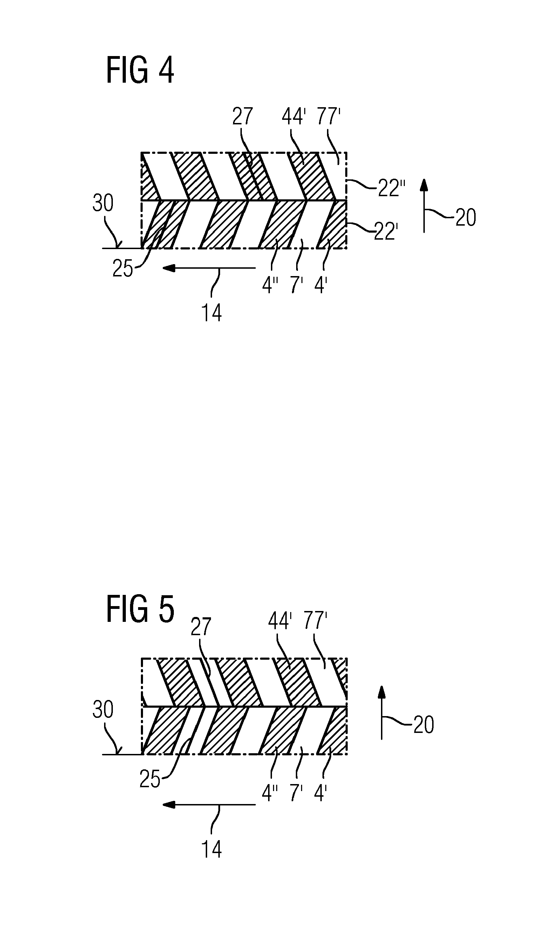

Ebenso kann ein die nächste Schweißebene 22'' nur um ein Bruchteil einer Schweißbahnbreite verschoben werden (in abgewandter Form in Figur 5 dargestellt).

Für die dritte Schweißebene 22''' und die ggf. folgenden wiederholt sich vorzugsweise die Struktur der vorherigen Schweißebene, so dass in der Draufsicht sich ein Schachbrettmuster ergibt.

Figur 2 zeigt ein weiteres Ausführungsbeispiel der Erfindung. Die erste Schweißebene 22' wird hier wie Figur 1 hergestellt bzw. hat denselben Aufbau.
Jedoch wird für die zweite Schweißebene 22'' die Verlaufrichtung der Schweißbahnen 44', 77', ... geändert, vorzugsweise senkrecht zur Längsrichtung 11 in Querrichtung 14. Dort werden wiederum abwechselnd - wie in der ersten Schweißebene - nebeneinander Schweißbahnen mit verschiedenen Materialphasen oder Materialien nebeneinander gelegt. Die zweite Schweißebene 22'' ist quasi eine um 90° verdrehte erste Schweißebene 22'.

In der dritten Schweißebene 22''' wird vorzugsweise die Folge der ersten Schweißebene 22' wiederholt, d.h. die Verlaufrichtung der Schweißbahnen 444', 777', ... Schweißebene 22''' verläuft wieder in Längsrichtung 11, wobei die Schweißbahnen der dritten Schweißebene 222''' auch um eine Schweißbahnbreite nach links oder rechts d.h. in Querrichtung 14 verschoben sein könnten, d.h., die Materialphase 444' der Schweißbahn 22'' ist über eine Schweißbahn 4' der Schweißbahn 22' angeordnet.

Ein weiteres Ausführungsbeispiel ist in Figur 3 gezeigt.
Die erste Schweißebene 22' ist wie in Figur 1 ausgebildet, wobei dann für die zweite Schweißebene 22'' nur eine einzige, andere Materialphase/Material verwendet wird.

Für die dritte Schweißebene 22''' werden wiederum abwechselnd nebeneinander in Querrichtung 14 verschiedene Materialien für die Schweißbahnen verwendet, wobei entlang der Höhe 20 eine Schweißbahn 777' der Schweißebene 22''' in der ersten Schweißebene 22' eine andere Materialphase 4' gegenüberliegen hat.

Für die vierte Schweißebene mit nur einer Materialphase kann die der erste Materialphase 4 wiederverwendet werden oder die zweite Materialphase 7, so dass jede zweite Schweißebene nur eine einzige Materialphase aufweist.

Figur 4 zeigt ein weiteres Ausführungsbeispiel der Erfindung. Ähnlich wie in Figur 1 werden für die erste Schweißebene nebeneinander in einer Querrichtung 14 verschiedene Materialphasen verwendet. Jedoch ist der Querschnitt der Schweißbahnen schräg angestellt (Parallelogramm). Die Längsrichtung 25 der Schweißbahn 4', 7', ... verläuft schräg zur Oberfläche 30.
Für die zweite Schweißebene 22'' wird auf eine Schweißbahn 4' der ersten Schweißebene 22' mit der ersten Materialphase eine Schweißbahn 77' mit der zweiten Materialphase aufgebracht, wobei die Schweißbahnen 44', 77' zur anderen Seite verkippt sind, d.h. die Längsrichtung 27 der Schweißbahnen 44', 77' der nachfolgenden Schweißebene 22'' verläuft ebenfalls schräg zur Oberfläche 30.

Im Gegensatz zu Figur 4 sind in Figur 5 die Schweißbahnen in der zweiten Schweißebene 22'' bis zu einer Hälfte der Dicke einer Schweißbahn nach links oder nach rechts verschoben, d. h. eine Schweißbahn 44' überholt zwei Schweißbahnen 4', 7' der vorhergehenden Schweißebene 22'. Ebenso können diese um eine ganze Schweißbahnbreite verschoben sein.

Ebenso können in den Schweißebenen abwechselnd schräg und nicht schräge angestellte Schweißbahnen verwendet werden. Die erste Materialphase stellt vorzugsweise eine nickelbasierte Legierung dar, die einen bestimmten maximalen Anteil der γ'-Materialphase aufweisen kann vorzugsweise und aufweist.
Die zweite Materialphase kann vorzugsweise eine nickelbasierte Superlegierung sein, die eine andere chemische Zusammensetzung in den Elementen Nickel, Kobalt, Chrom, Titan, Tantal, Wolfram und Niob, soweit vorhanden, aufweist, aber auf jeden Fall einen anderen Anteil an der γ'-Materialphase aufweist.
Dies wird insbesondere erreicht durch einen höheren Titan- oder Aluminiumgehalt.

Solche Schweißstellen 17 können vorteilhafterweise an jeden Stellen verwendet werden.

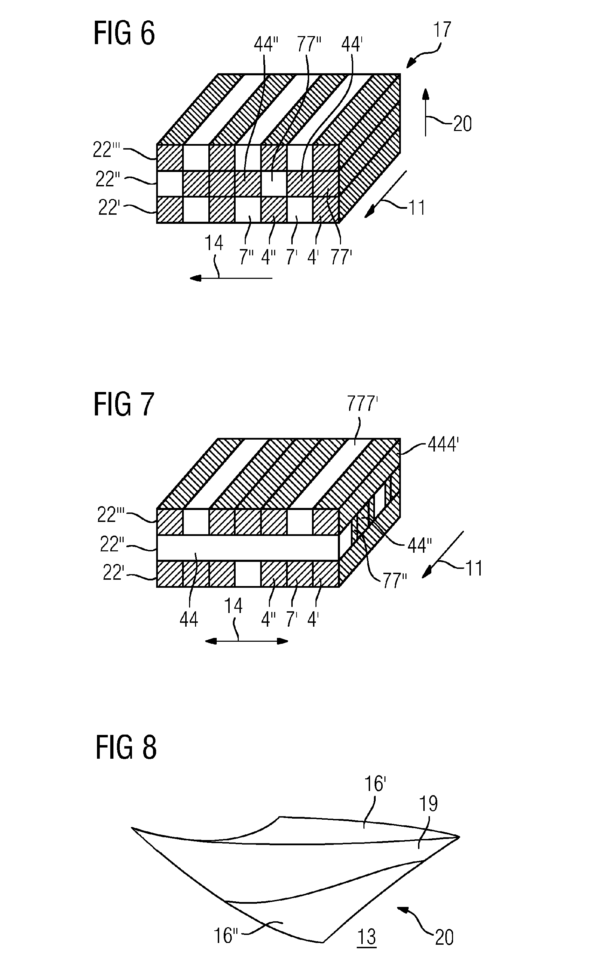

In Regionen 19 (Fig. 8), in denen die Temperaturbelastung und damit die mechanische Belastung höher ist, kann der Anteil der zweiten Materialphase mit dem höheren γ'-Gehalt erhöht werden, wie es in Figur 3, Figur 6 und 7 dargestellt ist und in den Regionen 16', 16'' ist der Anteil der γ'-Materialphase geringer wie in den Figuren 1 - 5 dargestellt.
Im Gegensatz zu den vorherigen Figuren 1, 4, 5 sind die Querschnitte eines Bereichs, der eine Materialphase oder ein Material aufweist, für eine Materialphase deutlich erhöht, hier die zweite Materialphase.
Bildlich gesprochen bedeutet das z.B. ausgehend von Fig. 1, dass in einer Schweißebene 22, 22' jede zweite Schweißbahn der ersten Materialphase ersetzt wird durch eine zweite Materialphase, wodurch der Anteil der Materialphase mit dem höheren γ'-Anteil der Schweißstelle 17 erhöht wird. Im Querschnitt der Schweißstelle 17 bei balkenförmiger Schweißbahnen der gleichen Materialphase oder des gleichen Materials ergibt sich eine Plusform (+).
Ebenso kann dies in umgekehrter Weise erfolgen für eine Materialphase mit niedrigen γ'-Gehalt in Bereichen, in denen die Temperaturbelastungen sehr gering sind gegenüber dem Durchschnitt.

In den Figuren 1 bis 8 wird durch diese Vielzahl von Korngrenzen mit erhöhter Materialphasenenergie, die durch das Nebeneinander von verschiedenen Materialphasen gegeben ist, das Risswachstum deutlich verringert und dadurch verbessert, dass der Risswiderstand deutlich steigt.

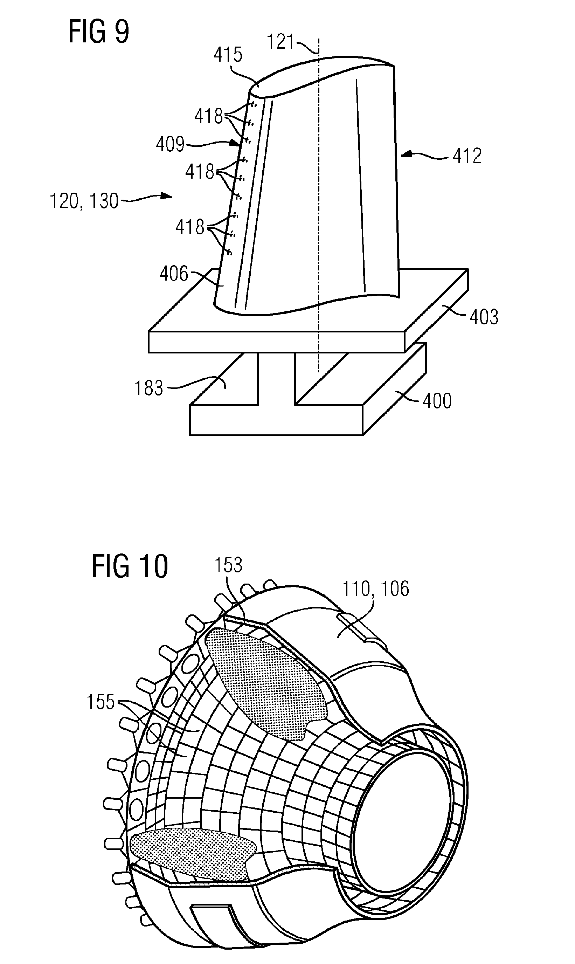

Die Figur 9 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 10 zeigt eine Brennkammer 110 einer Gasturbine. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

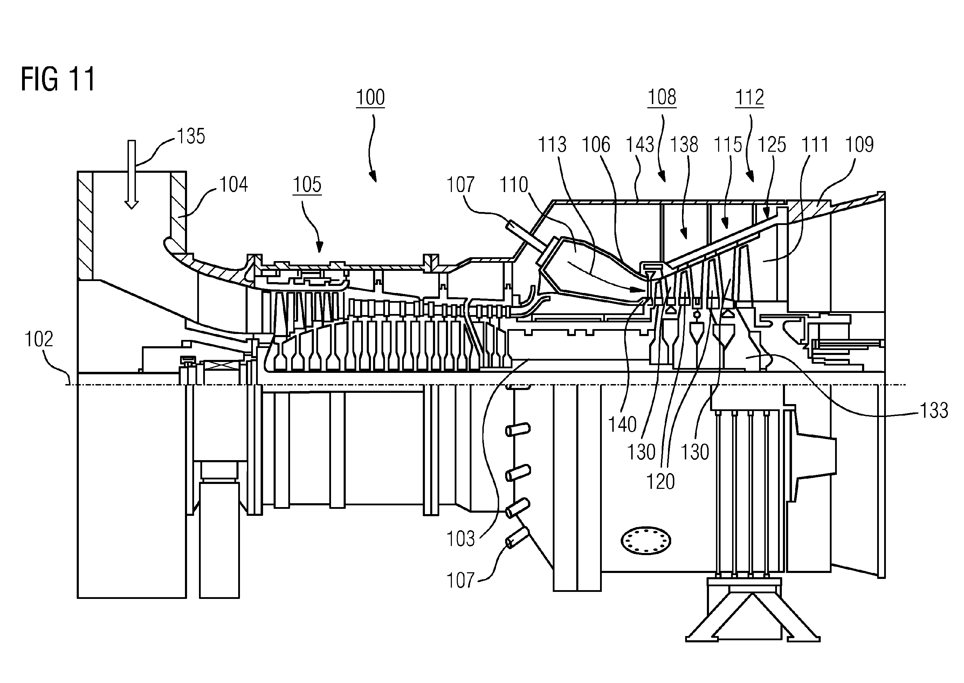

Die Figur 11 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Schweißstelle (17),
die längsgerichtete Schweißbahnen (4', 7', 4'' , 7'' , ..., 44', 77', 44'', 77'', ...) aufweist,
die jeweils eine Schweißebene (22', 22'' , ...) bilden, wobei mehrere Schweißebenen (22', 22'' , ...) vorhanden sind,
wobei in zumindest einer Schweißebene (22', 22'' , ...) verschiedene Materialphasen verwendet werden,
wobei zumindest zwei verschiedene,
insbesondere nur zwei,
verschiedene Materialphasen,
ganz insbesondere verschiedene Materialien,
vorhanden sind.

2. Schweißstelle nach Anspruch 1,
bei der zumindest eine,
insbesondere jede zweite,
ganz insbesondere jede Schweißebene (22', 22'' , ...) verschiedene Materialien aufweist,
insbesondere verschiedene Anteile der γ'-Materialphase einer nickelbasierten Legierung.

3. Schweißstelle nach Anspruch 1,
bei der jede zweite Schweißebene (22'') nur eine Materialphase oder nur ein Material aufweist.

4. Schweißstelle nach einem oder mehreren der vorherigen Ansprüche,
bei der die Materialphasen verschiedene Materialien darstellen.

5. Schweißstelle nach einem oder mehreren der vorherigen Ansprüche,
bei der alle Schweißbahnen (4' , 7' , 4'' , 7'' , ..., 44', 77', ...) in eine Längsrichtung (11) verlaufen.

6. Schweißstelle nach einem oder mehreren der vorherigen Ansprüche,
bei der die Schweißbahnen (4' , 7' , 4'' , 7'' , ... 44', 77', 44'' , 77'' , ...) einer Schweißebene (22', 22'', ...) jeweils alle in eine Richtung (11, 14) verlaufen.

7. Schweißstelle nach einem oder mehreren der vorherigen Ansprüche,
bei der benachbarte Schweißbahnen (4', 7', ... 44', 77', ...) einer Schweißebene (22', 22'') immer ein anderes Material oder eine andere Materialphase aufweisen.

8. Schweißstelle nach einem oder mehreren der vorherigen Ansprüche,
bei der die Schweißbahnen (44', 77') einer Schweißebene (22'') eine andere Materialphase aufweisen als die direkt unterliegenden und kontaktierten Schweißbahnen (7', 4', ...) der unterliegenden Schweißebene (22') auf der (7', 4', ...) die jeweiligen Schweißbahnen (44', 77', ...) aufliegen.

9. Schweißstelle nach Anspruch 8,
bei der eine nachfolgende Schweißebene (22''') mit ihren Schweißbahnen (444', 777', ...) der vorvorhergehenden Schweißebene (22') mit dem Schweißbahnen (4', 7', ...) entspricht.

10. Schweißstelle nach einem oder mehreren der Ansprüche 1 bis 4, 6 oder 7,
bei der die Schweißbahnen (44', 77', ...) einer nachfolgenden Schweißebene (22'') quer (14) zur Längsrichtung (11) der Schweißbahnen (4', 7', ...) der unterliegenden Schweißebene (22') verlaufen,
ganz insbesondere um 90°,
insbesondere dass die Verlaufrichtung der Schweißbahnen sich von Schweißebene (22', ...) zu Schweißebene (22'', ...) immer wieder ändert,
ganz insbesondere um 90°.

11. Schweißstelle nach Anspruch 10,
bei der eine nachfolgende Schweißebene (22''') mit ihren Schweißbahnen (444', 777', ...) der vorvorhergehenden Schweißebene (22') entspricht.

12. Schweißstelle nach Anspruch 10 oder 11,
bei der eine nachfolgende Schweißebene (22''') mit ihren Schweißbahnen (444', 777', ...) nicht der vorvorhergehenden Schweißebene (22') in Richtung (20) entspricht.

13. Schweißstelle nach einem oder mehreren der Ansprüche 1, 2, 3, 4, 5, 6, 9, 10 oder 11,
bei der in zumindest einer Schweißebene (22'') nur ein Material oder eine Materialphase vorhanden ist.

14. Schweißstelle nach einem oder mehreren der vorherigen Ansprüche,
bei der Schweißbahnen (4', 7', 44', 77', ...) mit ihrer Längsrichtung (25, 27) schräg zur Oberfläche (30) verlaufen,
insbesondere um 10° verkippt sind.

15. Schweißstelle nach Anspruch 14,
bei der die Längsrichtung (27) der Schweißbahnen (4', 7', ...) einer nachfolgenden Schweißebene (22'') im Vergleich zu der Längsrichtung (25) der Schweißbahnen (44', 77', ...) der vorhergehenden Schweißebene (22') in die andere Richtung verkippt ist.

16. Schweißstelle nach einem oder mehreren der vorherigen Ansprüche,
bei der die verschiedenen Schweißbahnen (44', 77', ...) der direkt nachfolgenden Schweißebene (22'') zwei Schweißbahnen (4', 7') der vorhergehenden Schweißebene (22') überdecken.

17. Schweißstelle nach einem oder mehreren der vorhergehenden Ansprüche,
bei der der Querschnitt der Schweißbahnen (44', 77', ...) verschieden groß ist,
insbesondere verschieden breit ist.

18. Schweißstelle nach Anspruch 17,
bei der der Querschnitt mehrer Schweißbahnen des gleichen Materials oder der gleichen Materialphase zusammen plusförmig (+) ausgebildet ist.

19. Schweißstelle nach einem oder mehreren der vorherigen Ansprüche,
bei dem zwei oder drei benachbarte Schweißbahnen die gleiche Materialphase oder das gleiche Material aufweisen.

20. Komponente,
die eine Schweißstelle (17) nach einer oder mehreren der vorherigen Ansprüche aufweist.

21. Komponente nach Anspruch 20,
bei der die Auftragsschweißung auf Stellen des Substrats aufgetragen wird,
die im Einsatz hohe und Temperaturen erfahren und auf Stellen des Substrats aufgetragen wird,
die im Einsatz niedrigere Temperaturen erfahren, und der Anteil des Schweißpulvers mit dem hohen γ'-Anteil in dem Bereich mit der höheren Temperaturbelastung höher ist.

22. Komponente nach einem oder beiden der Ansprüche 20 oder 21,
die ein nickel- oder kobaltbasiertes Substrat aufweist.
